# EUROPEAN PATENT SPECIFICATION

(11) **EP 2 192 281 B1**
(45) Date of publication and mention of the grant of the patent: **09.01.2013**
(21) Application number: 09177354.9
(22) Date of filing: 27.11.2009
(51) Int. Cl.: E02F 9/08, F01N 13/08, E02F 9/00, F01N 3/05

(54) **Exhaust cooling apparatus for construction equipment**
Auspuffkühlvorrichtung für Baumaschinen
Appareil de refroidissement de l'échappement pour équipement de construction

(30) Priority: 01.12.2008 KR 20080120229
(43) Date of publication of application: 02.06.2010
(73) Proprietor: Volvo Construction Equipment Holding Sweden AB, 631 85 Eskilstuna (SE)
(72) Inventor: Ikeda, Toshimichi, Gyeongsangnam-do, 641-430 (KR); Kim, Hoy Jong, Gyungsangnam-do (KR); Na, Chan Ju, Gyungsangnam-do (KR)
(74) Representative: Zimmermann, Tankred Klaus

(56) References cited:
- EP-A1- 1 637 710
- WO-A1-01/04474
- JP-A- 2000 160 598
- JP-A- 2003 041 622
- US-B1- 6 302 066
- US-H- H1 841

## Description

### BACKGROUND OF THE INVENTION

### Field of the invention

Exemplary embodiments relate to an exhaust cooling apparatus capable of discharging exhaust gas from an engine of construction equipment to the atmosphere after cooling it down. More particularly, exemplary embodiments relate to an exhaust cooling apparatus for construction equipment, which sends exhaust gas to the atmosphere after cooling it down. In this disclosure, hot exhaust gas (about 1000°C) emitted through an exhaust pipe from an engine of construction equipment such as excavator is mixed with air flowing out of an engine room and then cooled down in temperature.

### Description of the Prior Art

Exhaust gas discharged from an engine of heavy construction equipment such as excavator contains various kinds of harmful ingredients that may incur atmospheric pollution. For that reason, temperature of exhaust gas emitted from an engine is regularized on the level about 1000°C on the legal standards (Tier 4, Step 4, etc.).

Hot exhaust gas discharged to the atmosphere from an engine of construction equipment such as excavator, without removing or diminishing its toxicity, is easy to badly affect buildings or plant lives around the equipment, e.g., causing combustible matters to burn or plant lives to wither.

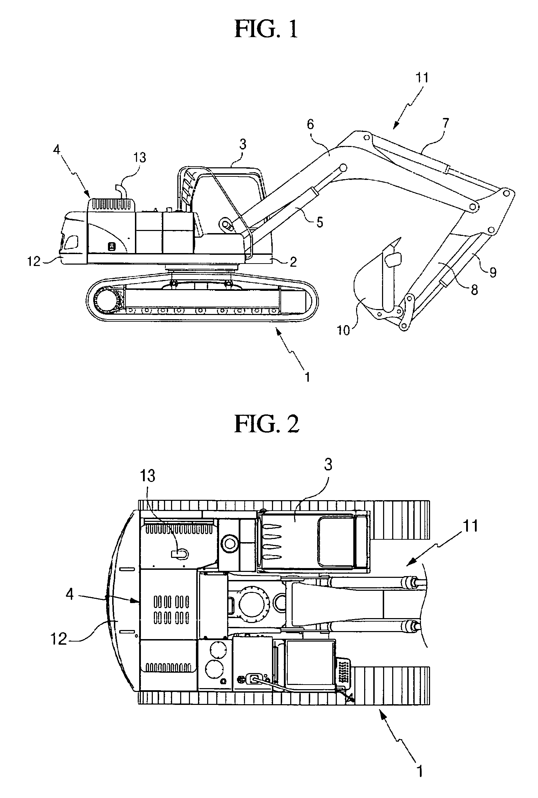

As shown in FIGs. 1 and 2, a general crawler-type excavator is usually organized of a lower driving structure (or traveler) 1, an upper swing structure 2, an operation cab 3, an engine room 4, a working device 11, a counter weight 12 and an exhaust pipe 13. The upper swing structure 2 is mounted on the lower driving structure 1. The operation cab and the engine room 4 are disposed at the upper swing structure. The working device 11 is organized of a boom 6, an arm 8 and a bucket 10. The boom 6 is movably coupled to the upper swing structure 2 and driven by a boom cylinder 5. The arm 8 is coupled to the boom 6 and driven by an arm cylinder 7. The bucket 10 is coupled to the arm 8 and driven by a bucket cylinder 9. The counter weight 12 is installed at the rear of the upper swing structure and functions to balance the excavator at work. The exhaust pipe 13 discharges hot exhaust gas to the atmosphere from the engine of the excavator.

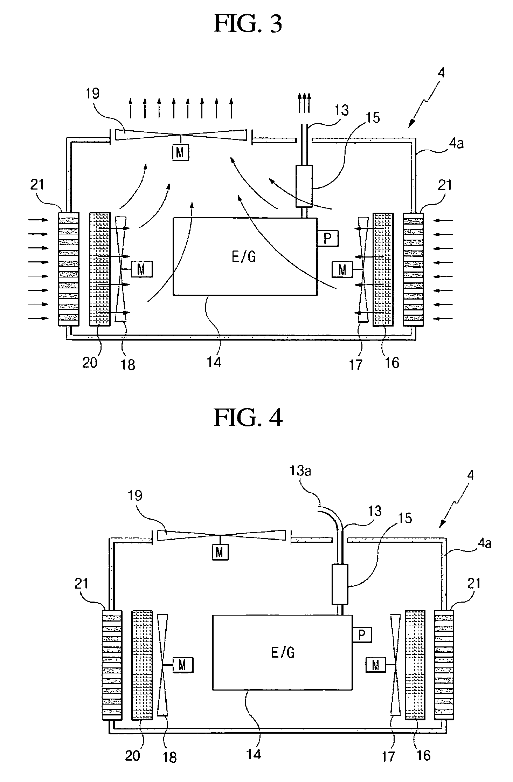

In the meantime, referring to FIG. 3, a cooling system, which is usually employed in construction equipment such as the crawler-type excavator shown in FIGs. 1 and 3, is generally organized of the engine room 4, the exhaust pipe 13, a radiator 20, an oil cooler 16, an oil cooler fan 17, a radiator fan 18 and a blower 19. The engine room 4 accommodates an engine 14, the radiator fan 18, the oil cooler fan 17, a blower 19 and a hydraulic pump P, all of which generate noise at work, in a closed space by a wall 4a. The exhaust pipe 13 discharges exhaust gas, which is emitted from the engine 14 through a muffler 15, to the atmosphere. The radiator 20 cools down a coolant of the engine 14. The oil cooler 16 cools down hydraulic fluid that returns to a hydraulic tank from an actuator (e.g., the boom cylinder 5). The oil cooler fan 17 enables the oil cooler 16 to make a heat exchange by introducing external air into the engine room 4 through rotation of a hydraulic motor M. The radiator fan 18 enables the radiator 20 to make a heat exchange by introducing external air into the engine room 4 through rotation of the hydraulic motor M. The blower 19 discharges internal air to the outside from the engine room 4 by means of rotation of the hydraulic motor M.

In FIG. 3, the reference numeral 21 denotes a noise trap disposed at the side of the intake of the engine room 4, shielding and reducing noise that would be exposed to the outside of the construction equipment from the engine room 4.

With this organization, during work of the engine 14, external air is introduced into the engine room 4 through rotation of the radiator fan 18 that is driven by the hydraulic motor M. Such external air taken into the engine room 4 is helpful to cooling down the coolant of the engine 4 by passing trough the radiator for heat exchange.

Meantime, the oil cooler fan 17 rotated by the hydraulic motor M introduces external air into the engine room 4. The external air, which is taken into the engine room 4, passes through the oil cooler 16 for heat exchange and then cools down hydraulic fluid that returns to the hydraulic tank from the actuators.

The external air introduced into the engine room 4 by rotations of the oil cooler fan 17 and the radiator fan 18 is discharged to the outside (i.e., to the atmosphere) by rotation of the blower 19, which is installed on the upper part of the engine room 4, after passing through the oil cooler 16 and the radiator 20.

In the cooling system aforementioned, the exhaust pipe 13, which emits exhaust gas from the engine 14 by way of the muffler 15, is disposed toward the rear of the excavator 13. Owing to such disposition of the exhaust pipe 13, exhaust gas of hot temperature could inadvertently harm or damage buildings or plant lives which are placed around the rear of the excavator.

US 6,302,066 B1 describes cooling system for a work machine which includes a radiator, a rotating fan assembly, a rotating deflector, and a means for rotating the fan and the deflector. The rotating fan assembly includes a fan and is for drawing air in a first direction across the radiator. The deflector has a concave surface with a plurality of projections extending therefrom and adapted to draw air in a second direction as the deflector is rotated.

US H 1841 H describes a system for evacuating air from an at least partially enclosed space around an internal combustion engine including an exhaust pipe for the flow of combustion products to atmosphere. The system includes a shaft and an impeller mountable for rotation on the shaft.

### SUMMARY OF THE INVENTION

It is an object of the invention to provide an improved exhaust cooling apparatus avoiding in an easy way harming objects which are placed around the rear of a construction equipment.

This object is achieved by an exhaust cooling apparatus of claim 1.

Exemplary embodiments of the present invention are directed to an exhaust cooling apparatus, for construction equipment, capable of preventing combustible matters, which are placed around the construction equipment such as excavator, from burning by hot exhaust gas. The final exhaust gas is discharged to the atmosphere after being cooled down, for which gas emitted from an engine through an exhaust pipe is mixed with air flowing out of an engine room through a blower.

The present invention provides an exhaust cooling apparatus for construction equipment having: a cooling fan taking external air into an engine room for heat exchange with an oil cooler and a radiator; and a blower flowing air from the engine room into the atmosphere. In the exhaust cooling apparatus, an outlet of an exhaust pipe for emitting exhaust gas from an engine may be fixedly disposed toward a discharge direction of the blower, wherein the discharge direction of the blower may be upwardly vertical to the ground.

### BRIEF DESCRIPTION OF THE DRAWINGS

The above and other objects, features and advantages of the present invention will be more apparent from the following detailed description taken in conjunction with the accompanying drawings, in which:
FIG. 1 is a side view of a general crawler-type excavator;
FIG. 2 is a schematic top view of the excavator without the working device shown in FIG. 1;
FIG. 3 is a schematic configuration view of a general cooling system for construction equipment;
FIG. 4 is a schematic configuration view illustrating an exhaust cooling apparatus for construction equipment according to an embodiment of the present invention;
FIG. 5 is a top view illustrating an excavator equipped with the exhaust cooling apparatus shown in FIG. 4;
FIG. 6 is a schematic view illustrating an operative feature of the exhaust cooling apparatus shown in FIG. 4; and
FIG. 7 illustrates an operative condition of the exhaust cooling apparatus, according to exemplary embodiments of the present invention, in construction equipment.

### DETAILED DESCRIPTION OF EXEMPLARY EMBODIMENTS

Hereinafter, exemplary embodiments of the present invention will be described in conjunction with the accompanying drawings. The matters defined in the description, such as the detailed construction and elements, are nothing but specific details provided to assist those of ordinary skill in the art in a comprehensive understanding of the invention, and thus the present invention is not limited thereto. The same reference numerals are used for the same elements throughout the accompanying drawings.

Referring to FIGs. 4 through 7, an exhaust cooling apparatus according to exemplary embodiments of the present invention may be applicable to construction equipment that has a cooling system including: cooling fans 17 and 18 taking external air into the engine room 4 for heat exchange with a oil cooler 16 and a radiator 20; and a blower 19 discharging air from the engine room 4 into the atmosphere. The exhaust cooling apparatus is configured such that an outlet 13a of an exhaust pipe 13 for emitting exhaust gas from an engine 14 is fixed toward the discharge direction of the blower 19.

The discharge direction of the blower 19 is upwardly vertical to the ground.

Except the exhaust pipe 13 installed to cool down exhaust gas by mixing the exhaust gas, which is emitted from the engine 14 through the exhaust pipe 13, with air flowing out of the engine room 4 by the blower 19, the exhaust cooling apparatus shown FIGs, 4 through 7 is substantially similar to the cooling system shown in FIG. 3.

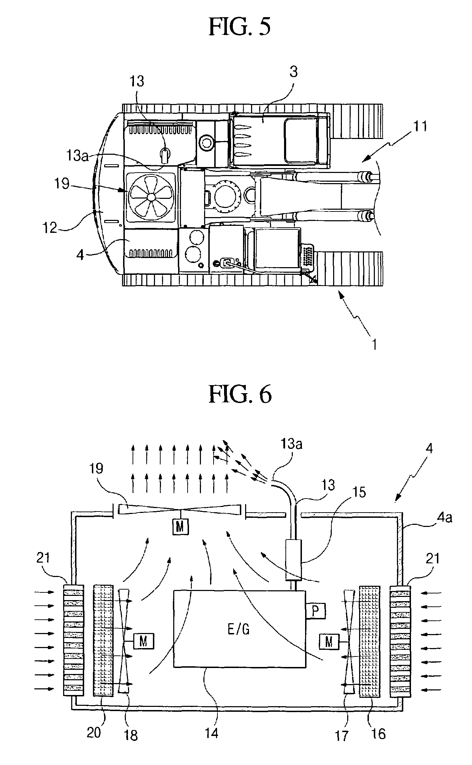

Hereinafter, an operative condition of the exhaust cooling apparatus for construction equipment will be described with reference to FIGs. 5 through 7.

As illustrated in FIGs. 5 through 7, hot exhaust gas emitted from the engine 14 is discharged to the atmosphere by way of the muffler 15 and the exhaust pipe 13. External air taken into the engine room 4 by rotations of the cooling fans (i.e., an oil cooler fan 17 and a radiator fan 18) is heat-exchanged through the radiator 20 and the oil cooler 16. This heat-exchanged air is discharged to the atmosphere from the engine room 4 by rotation of the blower 19.

During this, as shown in FIG. 5, since the outlet 13a of the exhaust pipe 13 is fixedly disposed toward the discharge direction of the blower 19, the hot exhaust gas from the exhaust pipe 13 is mixed with air that flows out of the engine room 4 by the blower 19.

As a result, it is able to cool down the finally discharged exhaust gas in temperature by mixing the hot exhaust gas (about 1000**°C**) with air (about 70**°C** by heat exchange through the radiator 20 and the oil cooler 16) that flows out of the engine room 4.

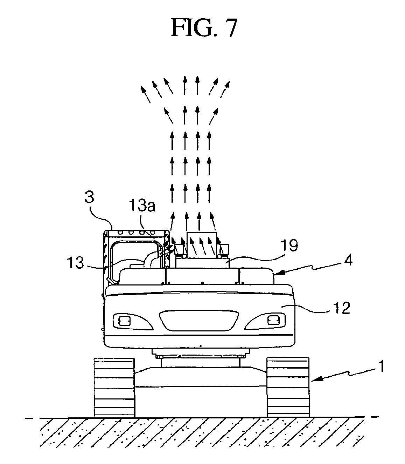

Summarily, hot exhaust gas emitted through the exhaust pipe 13 is cooled down in temperature after mixing with air flowing out of the engine room 4 through the blower 19. Then, the cooled-down exhaust gas can be discharged to the atmosphere away from the ground as the discharge direction of the blower 19 is looking upward (see FIGs. 5 and 7).

Therefore, even when there are buildings or combustible matters over the excavator, it is possible to prevent a fire because exhaust gas from the engine 14 is discharged to the atmosphere in cool temperature. Moreover, even when the excavator is working under plant lives, it prevents the plant lives from withering due to hot and harmful exhaust gas.

As described above, the exhaust cooling apparatus for construction equipment according to this embodiment of the present invention is effective in preventing combustible matters from burning, or preventing plants from withering, due to hot exhaust gas around construction equipment such as excavator, by discharging the hot exhaust gas to the atmosphere after cooling it down by means of air flowing out of the engine room.

Although exemplary embodiments of the present invention have been described for illustrative purposes, those skilled in the art will appreciate that various modifications, additions and substitutions are possible, without departing from the scope and spirit of the invention as disclosed in the accompanying claims.

## Claims

1. An exhaust cooling apparatus for construction equipment having:
a cooling fan (17, 18) for taking external air into an engine room (4) for heat exchange with an oil cooler (16) and a radiator (20); and
a blower (19) for flowing air out of the engine room (4) to the atmosphere,
wherein an outlet (13a) of an exhaust pipe (13) is fixedly disposed toward a discharge direction of the blower (19) so as to emit exhaust gas from an engine (4), and
wherein the discharge direction of the blower (19) is upwardly vertical to the ground.

## Patentansprüche

1. Eine Auspuffkühlvorrichtung für Baugeräte, die folgende Merkmale aufweist:
einen Kühllüfter (17, 18), der externe Luft in einen Motorraum (4) zieht zum Wärmeaustausch mit einem Ölkühler (16) und einem Kühler (20); und
ein Gebläse (19) zum Ausstoßen von Luft aus dem Motorraum (4) in die Umgebung,
wobei ein Auslass (13a) eines Auspuffsrohrs (13) fest hin zu einer Auslassrichtung des Gebläses (19) angeordnet ist, um Auspuffgas aus einem Motor (4) abzugeben, und
wobei die Ausstoßrichtung des Gebläses (19) aufwärts vertikal zum Boden ist.

## Revendications

1. Appareil de refroidissement d'échappement pour matériel de construction présentant:
un ventilateur de refroidissement (17, 18) destiné à aspirer de l'air extérieur vers la chambre de moteurs (4) en vue de l'échange de chaleur avec un refroidisseur d'huile (16) et un radiateur (20); et
un souffleur (19) destiné à faire circuler de l'air hors de la chambre de moteurs (4) vers l'atmosphère,
dans lequel une sortie (13a) d'un tuyau d'échappement (13) est disposé de manière fixe dans une direction de refoulement du souffleur (19), de manière à émettre du gaz d'échappement d'un moteur (4), et
dans lequel la direction de refoulement du souffleur (19) est verticalement vers le haut par rapport au sol.
